(19) Europäisches Patentamt / European Patent Office / Office européen des brevets

(11) **EP 2 900 090 B1**

(12) **EUROPEAN PATENT SPECIFICATION**

(45) Date of publication and mention of the grant of the patent:
**27.07.2016 Bulletin 2016/30**

(21) Application number: **13774245.8**

(22) Date of filing: **26.09.2013**

(51) Int Cl.:
*A23L 33/21* (2016.01)   *A23L 7/10* (2016.01)
*A23L 7/117* (2016.01)   *A23L 33/00* (2016.01)
*A23L 5/20* (2016.01)   *A23L 5/10* (2016.01)
*A21D 6/00* (2006.01)   *A21D 8/02* (2006.01)
*A21D 13/02* (2006.01)

(86) International application number:
**PCT/NL2013/050688**

(87) International publication number:
**WO 2014/051428 (03.04.2014 Gazette 2014/14)**

(54) **NEW FOODS WITH MODIFIED CEREAL BRAN AND METHODS FOR PRODUCING THESE**

NEUE LEBENSMITTEL MIT GETREIDEKLEIE UND VERFAHREN ZU IHRER HERSTELLUNG

NOUVEAUX ALIMENTS AVEC SON DE CÉRÉALES MODIFIÉ ET PROCÉDÉS POUR LES PRODUIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2012 EP 12186141**

(43) Date of publication of application:
**05.08.2015 Bulletin 2015/32**

(73) Proprietor: **Nederlandse Organisatie voor toegepast- natuurwetenschappelijk onderzoek TNO 2595 DA 's-Gravenhage (NL)**

(72) Inventors:
• **DIAZ, Jerome Villarama**
  **2595 DA 's-Gravenhage (NL)**
• **HÜBNER, Florian**
  **2595 DA 's-Gravenhage (NL)**
• **NOORT, Martijn Willem-Jan**
  **2595 DA 's-Gravenhage (NL)**
• **SLAGHEK, Theodoor Maximiliaan**
  **2595 DA 's-Gravenhage (NL)**

• **ESSERS, Maurice Karel Hubertina**
  **2595 DA 's-Gravenhage (NL)**

(74) Representative: **V.O.**
  **P.O. Box 87930**
  **2508 DH Den Haag (NL)**

(56) References cited:
**EP-A2- 0 196 464     JP-A- S5 548 355**
**JP-A- S57 174 063     JP-A- S58 183 050**
**JP-A- S61 268 144     SK-U1- 1 442 011**
**US-A- 5 112 964     US-A1- 2004 018 256**

• **DATABASE WPI Week 200822 Thomson Scientific, London, GB; AN 2008-D10164 XP002696166, & JP 2008 054586 A (JOSHO FURUSATO SHOKUHIN YG) 13 March 2008 (2008-03-13)**
• **DATABASE FSTA [Online] INTERNATIONAL FOOD INFORMATION SERVICE (IFIS), FRANkFURT-MAIN, DE; YOUNG SOO KIM: "Effect of heat treatments on physicochemical properties of defatted rice bran.", XP002696167, Database accession no. FS-2000-01-Me0089**

**Description**

FIELD OF THE INVENTION

The present invention relates to methods for preparing food, more particularly more convenient food. In particular the invention relates to a method for using cereal bran to improve the properties of food, more particularly methods to process the cereal bran before introducing it into the food. More specifically the invention relates to a method to modify the cereal bran so that its nutritional properties are enhanced and/or made more readily available.

BACKGROUND

Cereal bran, a by-product of the milling process is often used in food preparations for health reasons. It is rich in fibers and essential fatty acids and thus would stimulate intestinal processing of the food. Further, it contains various antioxidants that impart beneficial effects on human and animal health.

However, the ingredient functionality and organoleptic properties of bran in food systems is often poor. In most cases, addition of high levels of wheat bran results in off-flavors. More importantly, wheat bran negatively affects food properties in certain application. As an example, it is well known that addition of wheat bran to bread lowers the bread volume. It is therefore necessary to modify wheat and other cereal bran in such a way that its nutritional and functional properties are maintained or enhanced. In the prior art physical modification techniques have been used, such as wet milling and subsequent centrifugation, which increased the concentration of dietary fiber and increased the proportion of insoluble fiber. Complementing this with enzymatic treatment increased the amount of reducing sugars in the soluble fraction after centrifugation (O. Lehtinen, 2012, Modifying wheat, bran for food applications - effect of wet milling and enzymatic treatment. Metropolia University of Applied Sciences, Finland). Nevertheless, there is still need for further methodologies for modification of cereal bran for application in food, wherein such methodologies have no severe impact on the (other) physico-chemical characteristics of the bran.

SUMMARY OF THE INVENTION

In the present invention, it was surprisingly found that it is possible to increase the nutritional value of cereal bran without resulting in adverse physicochemical changes. Especially advantageous is that it is possible to achieve this with a relatively mild, clean label approach. Accordingly, the invention comprises a method for enhancing the nutritional value of food comprising:

a. optionally milling a cereal grain,
b. pre-treating cereal bran
c. treating cereal bran with super heated steam (SHS) performing the SHS treatment under water activity level of between 0.3 and 0.9, preferably between 0.4 and 0.8, more preferably between 0.5 and 0.7, more preferably at about 0.7
d. adding the bran resulting from the previous step to a food product or semi-product
e. if needed, completing the food preparation process by further processing the semi-product or food product.

Preferably in such a method the semi-product is dough and the further processing comprises baking.
In a further embodiment, in the method of the invention the bran is selected from wheat bran, rice bran, corn bran, oat bran, barley bran and millet bran, preferably wheat bran or corn bran. Also, in a preferred embodiment, the SHS treatment is performed at a temperature in the range of 110 - 200°C, more preferably in the range of 120-160°C..
The pre-treatment of the bran and the SHS treatment are preferably performed in one compartment and also preferably the pre-treatment is selected from the group of soaking/spraying under acid conditions, preferably phosphoric acid, acetic acid or a combination of these; soaking/spraying under basic conditions, preferably wherein the base is NaOH or KOH; and soaking/spraying in water. In a further preferred embodiment the SHS treatment is performed under elevated pressure, preferably where the pressure is between 1 and 5 bar, more preferably wherein the pressure is 0.5 to 3.0 bar.
The method of the invention can be performed batch-wise or continuous.
A further part of the invention is formed by the cereal bran which is treated with SHS at a controlled water activity level of between 0.3 and 0.9.
Preferably such a SHS treated cereal bran is pre-treated with an acid or a base and subsequently treated with SHS, preferably wherein the SHS treatment is performed at a water activity of less than 0.9.
Also part of the invention is a food product or semi-product to which the SHS-treated bran has been added. Preferably, such a food product is a bakery product, such as bread.

Further part of the invention is the use of a cereal bran that is treated with SHS at a controlled water activity level of between 0.3 and 0.9

for enhancing the nutritional value of a food product.

DESCRIPTION OF THE FIGURES

Figure 1: Color changes in SHS processed wheat bran as compared with untreated (control) wheat bran. Processing time of 30 minutes.

Figure 2: a. SEM-micrographs of wheat bran samples showing changes in blue fluorescence. From left to right, untreated/control wheat bran (A), SHS treated wheat bran (120°C, 0.5 a±, 30mins) (B), SHS treated wheat bran (160°C, 0.5 aw, 30mins)(C).

b. SEM-micrographs of wheat bran samples cross section. Top layer is luminal side. Bottom layer is epidermal side. From left to right, untreated/control wheat bran (A), SHS treated wheat bran (120°C, 0.5 a±, 30mins) (B), SHS treated wheat bran (160°C, 0.5 aw, 30mins)(C). Notice the increased thickness/width of the epidermal side (bottom layers).

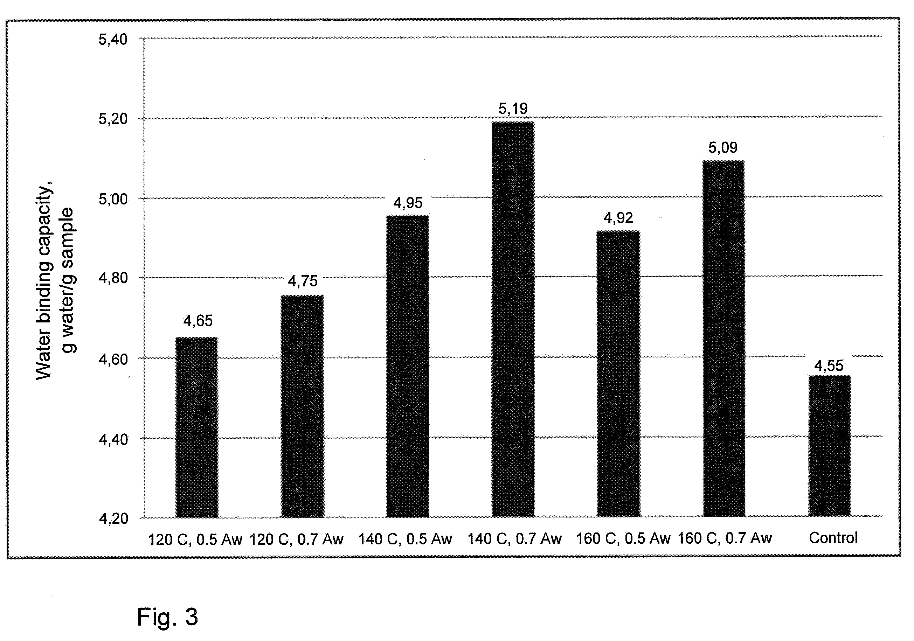

Figure 3: Water binding capacity of SHS processed wheat bran using simulated gastric fluid for four hours.

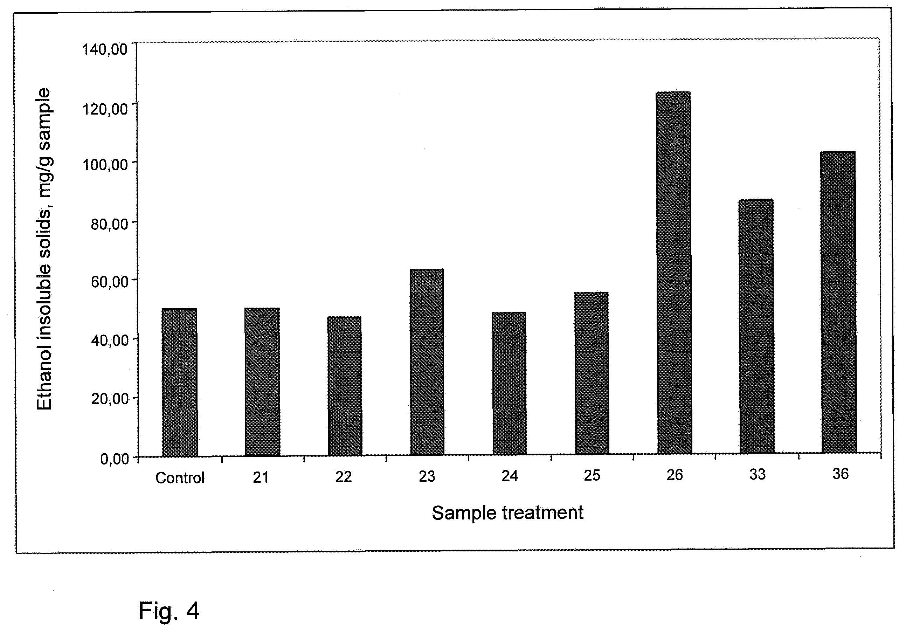

Figure 4: Ethanol insoluble solids obtained from water extracts of SHS processed wheat bran. Sample number are the last two digits of the sample labels as given in Table 1.

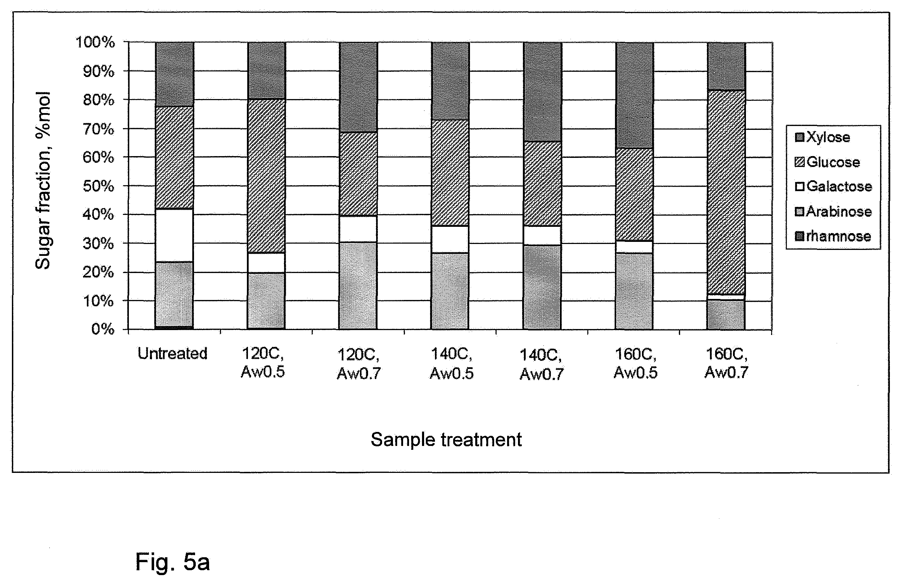

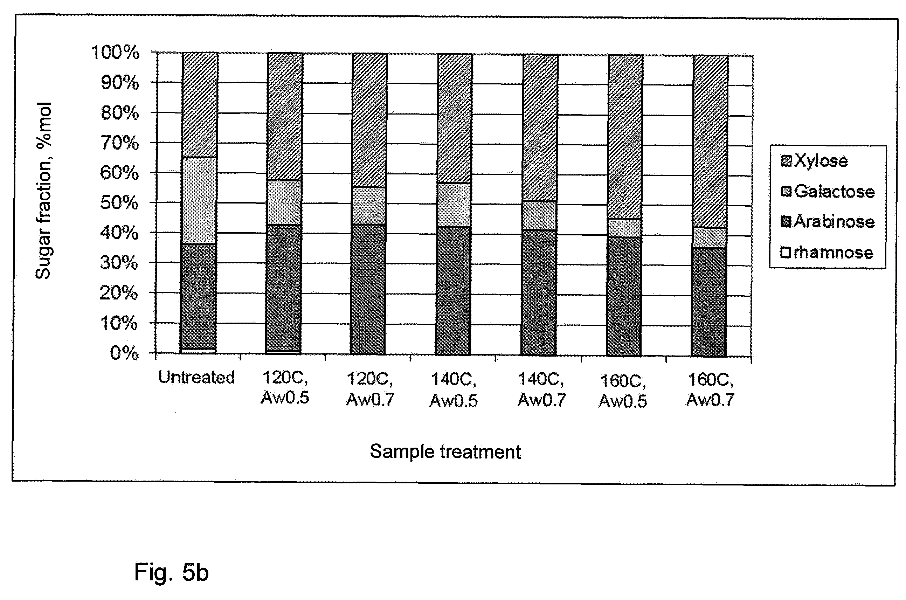

Figure 5: a. Sugar composition of water-soluble polysaccharides from SHS processed wheat bran;

b. Hemicellulose contents of water-soluble polysaccharides from SHS processed wheat bran

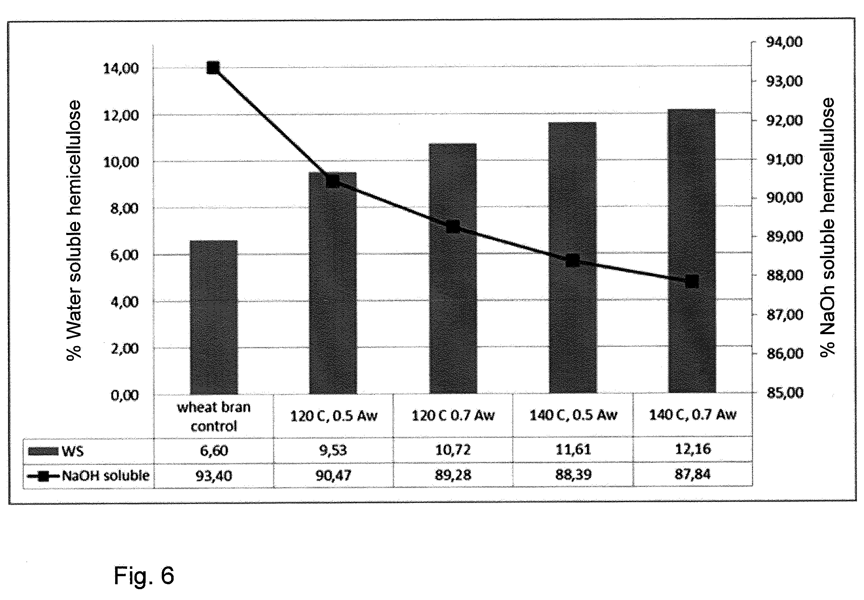

Figure 6: Proportional changes between water- and NaOH-solubilized arabinoxylan from SHS processed wheat bran compared with the control (not SHS processed).

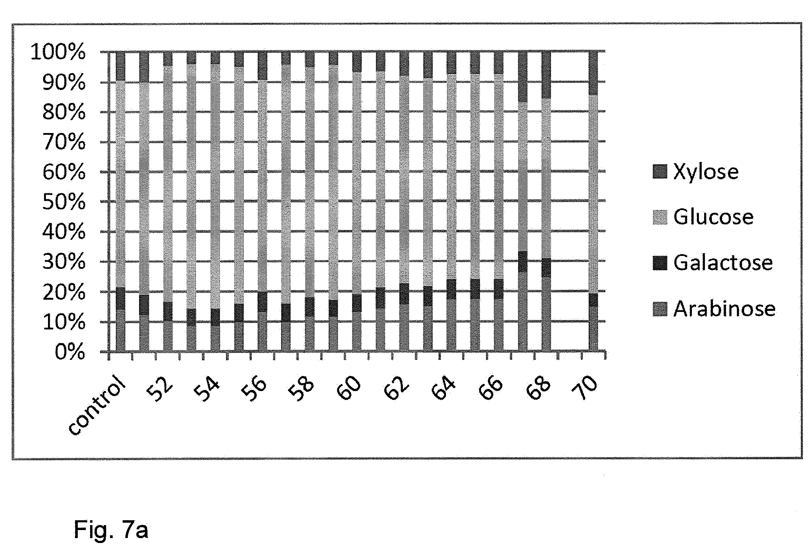

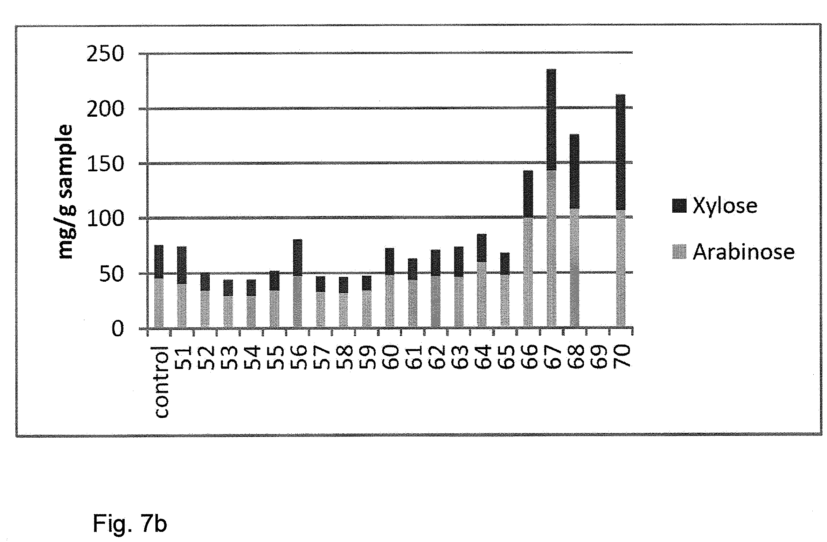

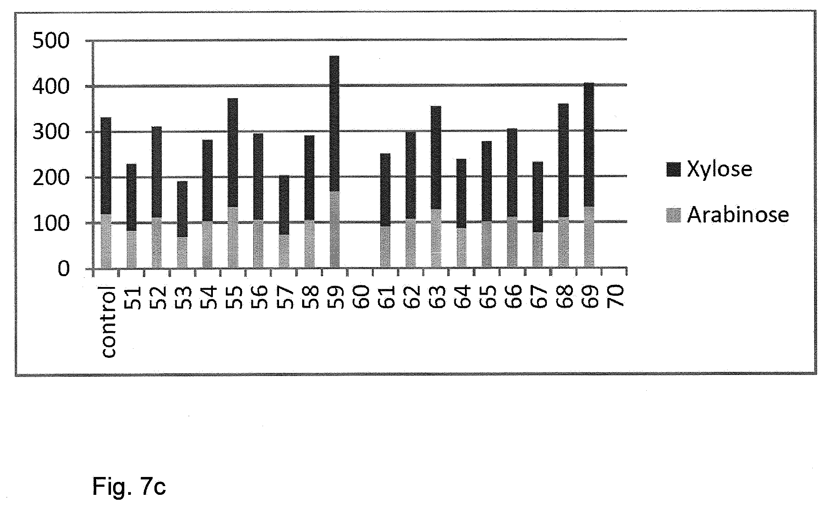

Figure 7: a. Sugar composition of water solubilized material from SHS processed corn bran;

b. Effect of SHS process conditions on corn bran water extractable xylose and arabinose sugar levels. Sample 69 was not analyzed;

c. Effect of SHS process conditions on corn bran NaOH extractable xylose and arabinose sugar levels.

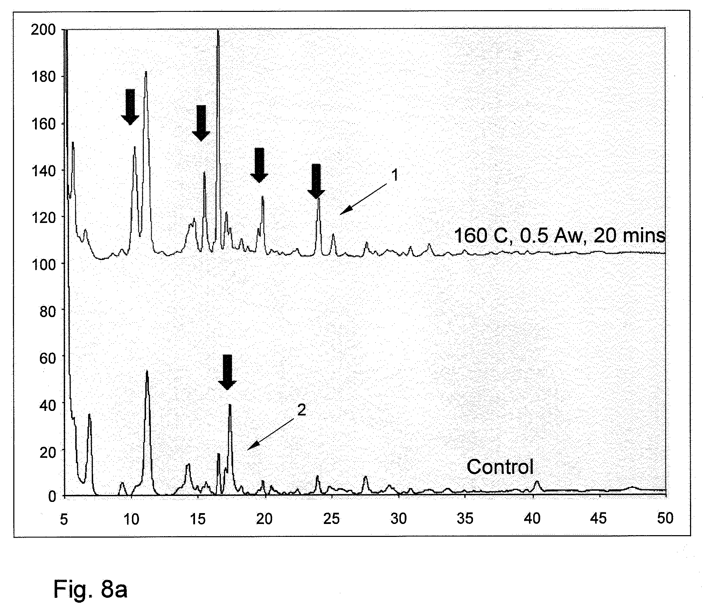

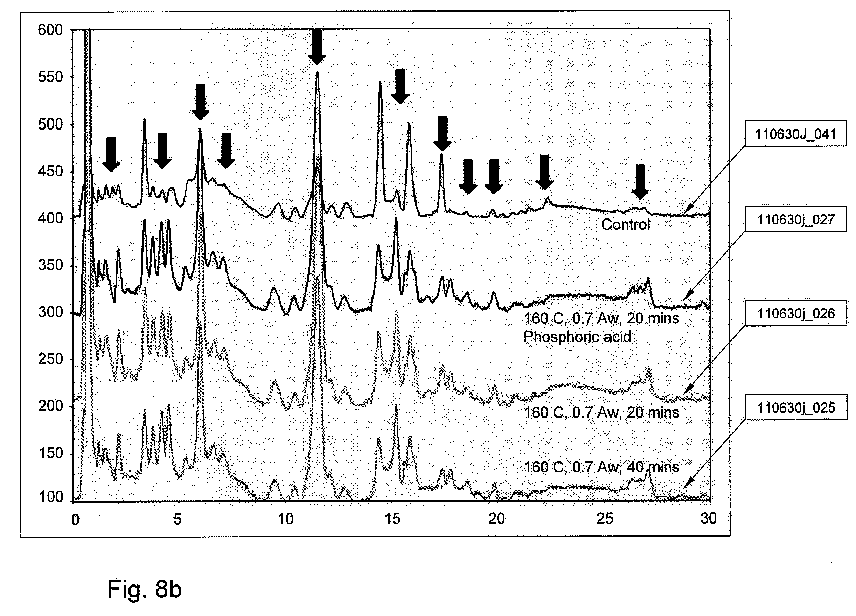

Figure 8: a. Oligosaccharide profile of NaOH extractable arabinoxylan as affected by SHS processing at 160°C, 0.5 Aw, 20 minutes;

b. Oligosaccharide profile of samples treated at 160°C as affected by pre-treatment with phosphoric acid and heating time.

DETAILED DESCRIPTION

In the present description the following definitions are used.

"Bran" or "cereal bran" is the hard outer layer of cereals which consists of combined aleurone and pericarp. Along with germ, it is an integral part of whole grains, and is often produced as a by-product of milling in the production of refined grains. When bran is removed from grains, the grains lose a portion of their nutritional value. Bran is present in and may be milled from any cereal grain, including rice, corn (maize), wheat, oats, barley and millet. Other cereal grains are selected from the family of Poaceae, which family comprises, amongst others, the grain crops rye and sorghum.

"Super Heated Steam" (SHS) is steam that is (indirectly) heated to a temperature above its evaporation temperature. When water is heated it evaporates to steam at the boiling temperature of water to form steam. For example at atmospheric pressure the boiling temperature of water is 100 °C; for higher pressures the boiling temperature increases. This steam is still at the boiling temperature and it is called saturated steam. When saturated steam cools down it immediately condenses to water. When however this saturated steam is heated, the temperature increases while the pressure stays the same. This is called Super Heated Steam, SHS, or dry steam. This SHS can cool down without immediate condensation. Only when the SHS is cooled down until the boiling temperature of water at the given pressure, it will start to condense.

"Water activity" or $a_w$ is developed to account for the intensity with which water associates with various non-aqueous constituents and solids. Simply stated, it is a measure of the energy status of the water in a system. It is defined as the vapor pressure of a liquid divided by that of pure water at the same temperature; therefore, pure distilled water has a water activity of exactly one. The water activity of SHS as a processing medium can be controlled by varying the pressure and the superheating temperature. The $a_w$ of SHS is the defined as the actual absolute pressure of the SHS divided by the pressure that saturated steam would have at that actual temperature of the SHS.

$$\text{In formula: } a_w = P_{SHS} / P_{\text{saturated steam at T SHS}}$$

(P = absolute pressure)

Some examples:

| Absolute pressure SHS (bar) | Temperature SHS (°C) | Absolute pressure saturated steam at temperature SHS (bar) | water activity ($a_w$) |
|---|---|---|---|
| 1 | 120 | 2 | 1/2=0.50 |
| 1 | 144 | 4 | 1/4=0.25 |
| 1 | 159 | 6 | 1/6=0.17 |
| 1 | 180 | 10 | 1/10=0.10 |
| 2 | 144 | 4 | 2/4=0.50 |
| 2 | 159 | 6 | 2/6=0.33 |
| 2 | 180 | 10 | 2/10=0.2 |
| 4 | 159 | 6 | 4 / 6 = 0.67 |
| 4 | 180 | 10 | 4 / 10 = 0.40 |
| 6 | 180 | 10 | 6 / 10 = 0.60 |

This makes SHS unique over hot air, where the $a_w$ value is always very low, normally below 0.01

"Moisturising", "hydration" or "steeping" as used in the present description is a process in which a material is soaked in or sprayed with a liquid, resulting in a material with increased liquid content. Such a process may also be indicated by the words "soaking" or "drenching".

"Food" may comprise anything that is edible to mammals or other animals and which is meant to provide the necessary elements, building materials and fuel materials for maintaining the vital processes in a living body. Accordingly, food can also be defined as any nourishing substance that is eaten, drunk, or otherwise taken into the body to sustain life, provide energy, promote growth, etc. Since it is not restricted to humans, also feed is encompassed in the current definition of food. A "foodstuff" or "food product" is an edible item, mostly consisting of, *inter alia,* carbohydrates, proteins and/or fatty substances which can be of any physical appearance. A "semi-product" or "half-finished product" is a food product that still needs to undergo further processing to make it suitable for consumption. A typical example of such a semi-product is dough which needs to be baked to form food products like bread, cake, etc.

"Enhancing the nutritional value of food" should be interpreted as increasing the fibre content of the food.

Wheat bran consists of about 46% non-starch polysaccharides. Of this, the main non-starch polysaccharides present are arabinoxylan (70%), cellulose (24%) and beta glucans (about 6%) (Ralet et al, 1990, J. Cereal Sci 11:249-259). Of the 70% arabinoxylan only a minor part is water soluble. Reports of water extractable wheat bran arabinoxylan range from 5 to 10 % of the total wheat bran arabinoxylan content. In contrast, 30% of wheat endosperm arabinoxylan may be extracted with water (Maes and Delcour, 2001, J. Cereal Sci. 35(3):315-326). However, wheat endosperm only contains about 2 to 3% arabinoxylan. This makes wheat bran an important source of cereal derived arabinoxylan.

The major portion (up to 90%) of the wheat bran arabinoxylan is tightly bound (physically and chemically) to other cell wall constituents (cellulose microfibrils, lignin, etc.). As a consequence, the large proportion of wheat bran arabinoxylan can only be extracted by using strong mineral acids or bases. However, these harsh chemical treatments while extracting the tightly bound arabinoxylans render the wheat bran inapplicable as an ingredient in itself. In addition, the extracted arabinoxylans need further processing and purification before they could be used as an ingredient in food.

Corn bran is a by-product from the commercial corn milling process and in most cases it is also named corn pericarp. The cell wall structure of the corn bran is similar to the wheat bran in such a way that the major polysaccharides present are cellulose and arabinoxylan. However, unlike wheat bran, the major proportion of the fibers in corn is nearly completely insoluble.

The cell wall of the Poacae family mainly consists of lignocellulosic materials that is interconnected by a matrix of hemicelluloses (Scheller and Ulvskov, 2010, Annu Rev Plant Biol 61:263-289). In wheat, the major hemicellulose is arabinoxylan that is esterified with polyphenolic compounds, mainly ferulic acid, at the arabinose residues. The ferulic acid groups in turn could be esterified within the lignin network. The arabinoxylan forms H-bonding with the cellulose microfibrils. The H-bonding and the esterification with polyphenolic groups renders the lignocellulosic cell wall of the grass family tightly bound and recalcitrant to many physical and chemical processes. However, understanding the architecture of the cell walls of wheat and of the grass family brings into light possible routes so that the cell wall may be loosened and make their constituents more accessible. The hydrolysis of the variously interconnected polysaccharides such as arabinoxylan, cellulose microfibrils is one route for cell wall loosening. The de-esterification of the arabinose with the ferulic acid will also loosen the cell wall architecture. Additionally, hydrolysis of the arabinose side chains of arabinoxylan will also lead to loosening. Different routes may be employed for the cleavage of the abovementioned elements. These routes may include a combination of physical (thermal treatments), chemical (saponification using mineral bases, acid hydrolysis) or enzymatic (using ferulic acid esterase to cleave ferulic acid, cleavage of the xylan back bone using xylanase) protocols.

There are many prior art documents that apply steam at high temperature to a biomass, which is either pre-treated or not, to free and make soluble the carbohydrates (such as arabinoxylan) from such a biomass. This methodology is used predominantly in the field of biofuel, where such biomass further is processed into (bio)-ethanol. In the field of food technology steam is mainly used as a method for preparation of food alternative to boiling or to frying in oil and is used in the western cuisine mainly for cooking vegetables, while in the Chinese cuisine it is also used for preparing meat and seafood dishes. Also steaming of cereals is performed, but then mainly as an alternative for boiling.

Some patents describe the treatment of brans with SHS (JP 61 268144 and JP S58183050) however, the main purpose for SHS treatment for the bran is for disinfection/ sterilization before addition to food products. Furthermore, patents on modification of brans for increasing nutritional properties also been reported in the patent literature, however, the use of superheated steam with water activity control has not been mentioned (US 5112964, US 2004 0018256 A1).

Application of super heated steam in or for food products has been described earlier, but predominantly as an alternative for frying or baking (see for example WO 2004/066751 and WO 2007/105947).

The current inventors now have surprisingly found that a mild SHS treatment of cereal bran is able to increase the amount of soluble fibers, and hence the nutritional value of the bran, without any adverse effects on the other physico-chemical properties of bran that are important for application in food products. Moreover, treatment with SHS may result in an advantageous coloring of the food and in an advantageous aroma of the food.

For cereal bran, application of SHS can be performed according to methods that are known in the art.

The cereal bran is pre-treated before applying the SHS treatment. Said pre-treatment may consist of soaking or spraying the cereal bran mass into or with a liquid, which liquid can be water, but also impregnation with acid or base is possible and may be advantageous.

As acid or base in principle any inorganic or organic acid or base would be usable, but for economical reasons strong acids are preferred because even a diluted solution of such strong acids has sufficient hydrolytic action to be able to disclose the polysaccharides from the bran material. Further, since the acid treatment is preferably performed under an elevated temperature (from about 20°C to about 200°C) the acid solution should remain stable in this temperature range. Also, since it is possible that acid remains in the processed bran, the acid should be compatible with food applications. Most preferably acetic or phosphoric acid is used. The acid is added to provide a final concentration of about 0.1% to 4% (but this can vary even further based on the particular acid used).

As base preferably a hydroxide is used, such as calcium hydroxide, sodium hydroxide or potassium hydroxide or ammonia hydroxide. Of course similar criteria as regards the applicability of acids also determine the applicability of a base.

Further as acid or base any *in situ* formed acid (such as acetic acid) or base within the said process can be applicable.

Incubation of the cereal bran mass with the acid or base is preferably performed for about 0.5 hours to about 4 hours with an optimal incubation time of approximately one hour.

Incubation with acid or base is also preferably performed at an elevated temperature. Generally the process will satisfactorily run at a temperature of about 20°C to about 80°C, and it can of course most easily be applied at room temperature

After incubation, the cereal bran s placed in a steam process or, more generally defined, in a surrounding, preferably a closed surrounding, in which super heated steam can be led through the material. The whole modification process with SHS is preferably performed under an increased pressure. During this modification process in SHS also drying takes place, thus resulting in a cereal bran biomass with a lower water content than originally started. It can be performed under atmospheric pressure (1 Bara) up to 10 Bara, but preferably is performed under a pressure of 2-7 Bara, more preferably about 4 Bara.

Steam with a temperature of between about 100°C and 220°C (super heated steam, SHS) is produced and led through the chamber with the cereal bran. Preferably steam of about 120°C - 160°C is used.

During this step of the process the water activity is preferably kept constant. This allows the application of higher temperatures (which, in turn, will result in a better liberation of carbohydrates and other components) and also would allow for a minimalisation of the acid or base needed in the pre-treatment of the method of the invention. The water activity can easily be kept constant in SHS by keeping both the pressure and the SHS temperature constant. Preferably the water activity of the process is controlled by means of temperature and pressure of the super heated steam to be less than 1, preferably less than 0.8, more preferably in the range of 0.4-0.8.

During drying of the acid or base soaked bran mass, the effect of the acid or base pre-treatment will increase because the acid or base concentration increases due to the evaporation of water and the temperature increases during this process.

Thus, the above described process results in a bran preparation in which an increased portion of the polysaccharides is liberated and will be available for uptake in the digestive channel.

Such a bran preparation may be added to a food product in its raw state, i.e. without any further processing. This can for instance be done for oat or wheat bran, which can be consumed as such or in combination with any dairy product such as milk, yoghurt and the like. The bran, can also be added to a food product that needs further processing, like dough, among others.

The bran that is processed according to the method(s) disclosed in the present application will be a healthy addition to the diet because it is an improved source of dietary fibers in comparison with the untreated bran. Furthermore, the bran can be used to provide a (different) color to the food product and/or to provide a (different) aroma. As will be shown in the experimental part, SHS treatment of bran changes the color of the bran into a more dark brown, while it can provide a nutty aroma.

Most importantly and surprisingly, SHS treatment of bran changed the organoleptic properties of the bran in such a way that a more pleasant mouth feel was obtained.

All of the above changes are caused by the SHS treatment according to the invention without disturbing the major physico-chemical properties of the bran in such a way that the modified bran would no longer be usable in food.

In another aspect also the modified bran is part of the invention. As stated above and as will be shown in the experimental part, the cereal bran that is treated with SHS shows little (but important) differences with respect to the untreated bran. Not only color and aroma will change, but also gross structural changes like thickening and loosening of the cell walls and specific bran cell layers including the pericarp, nucellar layer, aleurone and endosperm cell wall. Also the morphology of the endosperm matrix did change after SHS treatment. These morphological changes contribute to changes in physico-chemical properties, such as an increased water binding capacity and an increased amount of water solubilized arabinoxylan. Next also further chemical changes take place, like denaturation of proteins and formation of Maillard reaction products (causing the change in color).

The present invention will now be further described in greater detail by reference to the following specific examples, which should not be construed as in any way limiting the scope of the invention.

EXAMPLES

**EXAMPLE 1 - EXPERIMENTS ON WHEAT BRAN**

**Methods and materials**

In order to evaluate the effect of the exploratory SHS processing parameters applied to the wheat bran, an initial screening was conducted on samples by measuring the following parameters 1.1 to 1.4. After the initial screening of the samples, process conditions that resulted in increased water binding capacity and dissolved solids were narrowed down. Afterwards, a new set of SHS processed wheat bran was produced based on the initial screening. These samples were then subjected to another round of more in-depth analysis to evaluate the effect of SHS on wheat bran physico-chemical properties. In addition, scanning electron microscopy under ultraviolet was conducted to determine structural changes in the wheat bran samples brought about by SHS processing. However, all other analyses were conducted on the supernatant obtained from the water holding capacity assay. It is assumed that the physical and chemical changes in the wheat bran will also be reflected in the solubilized material. The hypothesis is that, if SHS processing loosened the wheat bran structure, then more water solubilized material will be obtained.

### 1.1 Moisture content

The moisture contents of the samples were measured using an IR moisture meter (Sartorius). About 1 to 2 grams of sample was weighed directly onto the weighing pan. The moisture meter gave direct moisture contents of the samples.

### 1.2 Water binding capacity

The water binding capacity was evaluated using the centrifugation method. Briefly, about 3 grams of sample were weighted on to a 50 mL tube. About 45 mL of milli-Q water was then added. The samples were mixed over night at room temperature. After the incubation period the samples were centrifuged 5 G for 30 mins. The supernatant was then decanted. The weight of the residue was recorded. The water binding capacity of the sample was calculated as the difference in weight before and after soaking in water overnight. The water binding capacity is expressed as grams water bound per gram sample.

An additional test for some samples for water binding capacity was done using simulated gastric fluid instead of Milli-Q water. The simulated gastric fluid was adjusted to pH 2.0 with HCl and 2% salt was also added.

### 1.3 Soluble solids/ Refractive index

The supernatant from the water binding capacity assay was collected. The brix level of this liquid was obtained using a hand held refractometer (OMNI). The increase in soluble solids may indicate increased water-solubilized material. The change in refractive index of the samples after SHS treatment was also monitored along side the soluble solids level.

### 1.4 Charge leuel/Ion content

The charge level or ion content of the samples for screening was measured using a ion meter expressed in siemens.

### 1.5 Microscopy

Scanning electron microscopy and fluorescence microscopy were used to visualize changes in SHS processed wheat bran.

### 1.6 Sugar composition

The sugar composition was obtained from the total acid hydrolysis of the freeze-dried water solubilized material. About 10 to 20 mg of sample was hydrolyzed with 2M HCl at 100°C for 1 hour. The samples were then diluted 50 times, filtered through a 0.25 $\mu$m membrane filter and injected in a HPLC (Dionex)-PAD. Sugar standards were used. Sample preparation for the water solubilized material included alpha-amylase treatment followed by precipitation with 80 5 ethanol.

### 1. 7 Protein Analysis

#### 1.7.1 Sample preparation:

50 mg of each sample was extracted with 1 ml of electrophoresis sample buffer ((125mM Tris-HCl, pH 6.8, 4% SDS, 5% 2-mercaptoethanol, 0.4% bromophenol blue and 20% glycerol) and heated at 100°C for 40 minutes. The samples were then cooled to room temperature and centrifuged at 13000g for 2 minutes. About 5 $\mu$l of the supernatant was applied on the SDS electrophoresis gel. The soluble protein content was analysed using the standard Bradford method after centrifugation of the samples as described above.

The supernatants were diluted in the electrophoresis sample buffer and heated for 10 minutes at 100°C before application on the electrophoresis gel.

#### 1.7.2 Electrophoresis:

Broad range molecular weight standards from Biorad were prepared in the sample buffer. Unless stated otherwise, 5 $\mu$l of each sample or marker was applied on a SDS tricine electrophoresis gel (10-20%). The samples were run under standard conditions. Gels were stained by comassie blue in a solution containing 1.2g comassie blue in 300ml ethanol and 240ml demineralised water and 60ml acetic acid. De-staining was done with methanol, acetic acid and water in volumes with the ratio 10/10/80.

*1. 7.3 Molecular weight (Mw) determination*

The water solubilized material from the SHS processed wheat bran were analyzed for Mw using SEC-MALLS-RI chromatography. The samples were eluted with 100 mM Na-nitrate, pH 6.8 using a flow rate of 0.6 mL/min. The columns used were ultra hydrogel 500 and 1000 arranged in series. The data were analyzed using ASTRA v.6.2 (Wyatt Technologies, Santa Barbara). The cumulative weight averages of the Mw were plotted.

**Results**

*Morphological changes*

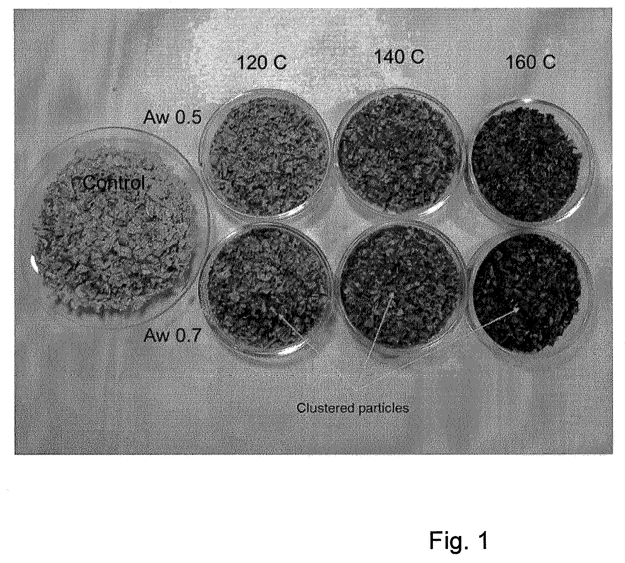

The exploratory SHS conditions used for wheat bran is outlined in Table 3-1. Temperatures from 100°C to 180°C were evaluated under relatively short processing times (5 to 20 mins). The water activity (Aw) levels used were at 0.3, 0.5 and 0.7. Overall, the results of the screening suggest that under short times of SHS processing, moisture condensation on the wheat bran occurs. More importantly physico-chemical parameters such as dissolved solids, ion content, refractive index and water binding did not change significantly (data not shown). However, the most prominent changes were seen on color and aroma of the samples. SHS condition between 120 and 180°C resulted in a physical color change (see some examples in Fig. 1). However, due to the short processing times, no other physical or chemical changes were noted. Based on color alone, the processing conditions were limited from temperatures of 120°C to 180°C with water activity at levels about 0.5.

After the exploratory SHS processing of wheat bran, the SHS parameters were narrowed down (Table 1). The times were increased to 50 mins. Samples processed at 160°C were also treated for 30 mins

Table 1. Treatment regimes for wheat bran

| Sample label | Time (min) | Temp (°C) | Pressure (bar abs) | Water activity |
|---|---|---|---|---|
| 03.15098.A21 | 50 | 120 | 1 | 0.5 |
| 03.15098.A22 | 50 | 120 | 1.4 | 0.7 |
| 03.15098.A23 | 50 | 140 | 1.8 | 0.5 |
| 03.15098.A24 | 50 | 140 | 2.6 | 0.7 |
| 03.15098.A25 | 50 | 160 | 3.1 | 0.5 |
| 03.15098.A26 | 50 | 160 | 4.3 | 0.7 |
| 03.15098.A33 | 30 | 160 | 3.1 | 0.5 |
| 03.15098.A36 | 30 | 160 | 4.3 | 0.7 |

It can be observed that wheat bran samples processed at 120 and 140°C already have color changes and slightly nutty aromas (Fig. 1). The samples processed at 160°C, however, were significantly darker with burnt aromas. The effect of water activity may also be seen through color changes. In general, samples processed at 0.5 $a_w$ were lighter, relative to the samples processed at 0.7 $a_w$. It was also observed that some particles were clustered on samples treated at 0.7 $a_w$.

Changes in the ultra structure of the wheat bran before and after SHS treatments were evaluated using scanning electron microscopy with a UV light source. The UV excites the lignin in the wheat bran producing a light blue fluorescent color. The advantage of this visualization technique is the absence of additional sample preparation that may introduce artifacts in the wheat bran structure. The intensity changes or variations in the blue fluorescence is indicative of changes in the structure of the wheat bran. The micrographs of the untreated (control) wheat bran show intense blue fluorescence that dissipates during SHS processing.

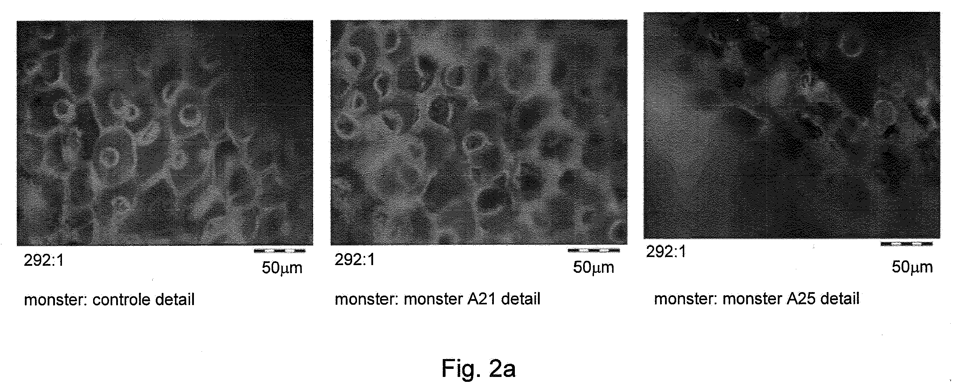

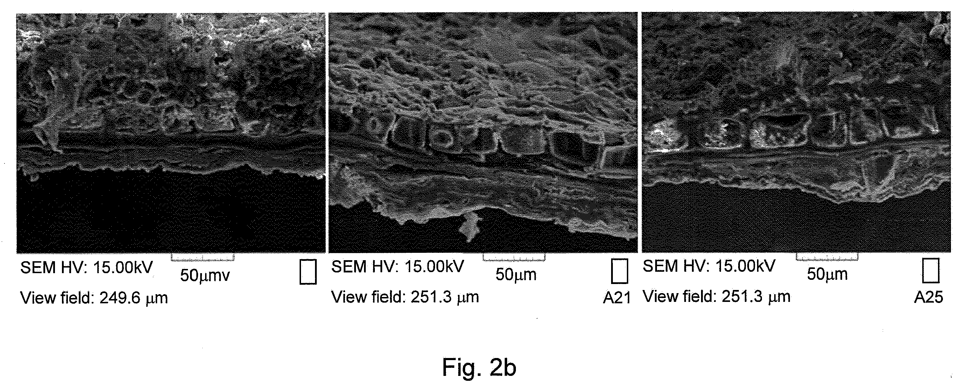

At higher magnifications, it is also observed that the wheat bran cell wall thickness increases from an average of about 1- 2 um to about 20 um (Figure 2a). This increase in cell wall thickness indicates a structural change in the SHS processed wheat bran. Electron micrographs also show a general loosening of the various layers in the wheat bran morphology (Figure 2b). The tight structural layers on the epidermal side of the micrographs in Figure 2b become looser, as indicated by the expansion of the layer.

*Water blinding capacity*

Water binding capacity of the samples was evaluated using the centrifugation method. The difference in the weight before and after water soaking overnight is the amount of water bound by the sample. Where the control sample showed an amount of less than 4 g water bound per g sample all SHS processed samples had increased water binding capacity of about 1 to 1.5 g water per gram sample relative to the unprocessed (control) wheat bran. The swelling capacity of the samples was also observed before the samples for the measurement of the water binding capacity were centrifuged. It was noted that the samples exposed to increasing SHS processing temperatures also results in an increased swelling of the wheat bran.

*Water blinding in simulated gastric fluid.*

The water binding capacity of the SHS processed wheat bran was also evaluated under physiological conditions using a simulated gastric fluid (2 g NaCl, pH 1.2 adjusted with HCl). The samples were soaked in the fluid for 4 hours, which is comparable to the time for gastric emptying. The results indicate an increased water binding for all SHS processed wheat bran in comparison with the control (Figure 3). The highest water binding was observed with the sample treated at 140°C, 0.7 $a_w$ for 50 mins.

The results also indicate that at higher $a_w$, the water binding also increased. Similarly, an increased processing temperature also resulted in increased water binding with the exception of the sample treated at 160°C. The decreased water binding may be due to the degradation mechanisms as discussed below.

*Ethanol insoluble solids*

The water solubilized high molecular weight (Mw) species were collected via precipitation in 80% ethanol. The change in the amount of ethanol insoluble solids is indicative of the degree of loosening of the cell wall structure of the wheat bran brought about by SHS processing. In general, the SHS processing of wheat bran increased the water solubilized high Mw species (Figure 4). Furthermore, the effect of water activity may also be observed on samples that were treated at 160°C . Samples 25 and 33 were treated at 160°C for 30 and 50 mins at 0.5 $a_w$, respectively. Samples 26 and 36 were treated at 160°C for 30 and 50 mins at 0.7 $a_w$, respectively. The increase in water solubilized material as affected by increasing the $a_w$ during SHS processing illustrates the benefit of water activity control, at least under these SHS processing conditions. In general, the results also suggest that the water solubilized material is increased with increasing process temperature. In addition, under the conditions tested, there is no clear difference between treatment at 0.5 and 0.7 $a_w$.

*Sugar composition of water solubilized material*

The sugar composition of the water soluble polysaccharides from SHS processed wheat bran revealed that there are five major sugars present (Figure 5a and 5b). These five sugars represent starch and arabinoxylan present in the solubilized material. The xylose contents of the wheat bran treated at increasing SHS process temperatures indicated an increase in solubilized xylan. The degree of arabinose remains the same. This indicates that the solubilized xylan at higher process temperatures has a low arabinosylation. Furthermore, the galactose levels in the SHS processed wheat bran decrease. The solubilized starch during processing varies but in general the amount of starch (seen through the amount of glucose) in the water soluble material increases with increasing process temperature. The proportion and amount of sugars that were solubilized does not seem to be affected by water activity ($a_w$) at least at the levels used in these experiments ($a_w$ of 0.5 and 0.7).

The probable amounts for arabinoxylan (AX) and arabinogalactan (AG) were calculated from the sugar composition (Table 2) using information on their relative proportions in wheat bran (Maes and Delcour, 2001). The results indicate that SHS processing lead to a solubilization of both AX and AG. However, the data suggests preferential hydrolysis of the AG. Arabinogalactan are highly branched polysaccharides consisting mostly of arabinose residues and a short backbone of galactan.

Table 2. Sugar composition and calculated proportions of corresponding arabinogalactan (AG) and arabinoxylan (AX) polysaccharides

| Sugar | Untreated | 120°C $a_w$ 0.5 | 120°C $a_w$ 0.7 | 140°C $a_w$ 0.5 | 140°C $a_w$ 0.7 | 160°C $a_w$ 0.5 | 160°C $a_w$ 0.7 |
|---|---|---|---|---|---|---|---|
| rhamnose | 1.46 | 0.81 | 0.00 | 0.00 | 0.00 | 0.00 | 0.00 |

(continued)

| Sugar | Untreated | 120°C $a_w$ 0.5 | 120°C $a_w$ 0.7 | 140°C $a_w$ 0.5 | 140°C $a_w$ 0.7 | 160°C $a_w$ 0.5 | 160°C $a_w$ 0.7 |
|---|---|---|---|---|---|---|---|
| arabinose | 34.85 | 41.97 | 43.07 | 42.58 | 41.69 | 39.26 | 35.77 |
| galactose | 28.89 | 14.85 | 12.61 | 14.49 | 9.47 | 6.48 | 7.13 |
| xylose | 34.80 | 42.37 | 44.32 | 42.93 | 48.84 | 54.27 | 57.10 |
| sum | 100.00 | 100.00 | 100.00 | 100.00 | 100.00 | 100.00 | 100.00 |
| | | | | | | | |
| AG | 41.91 | 21.60 | 17.66 | 20.29 | 13.26 | 9.07 | 9.98 |
| AX | 58.09 | 78.40 | 82.34 | 79.71 | 86.74 | 90.93 | 90.02 |
| sum | 100.00 | 100.00 | 100.00 | 100.00 | 100.00 | 100.00 | 100.00 |
| | | | | | | | |
| A/X | 0.67 | 0.85 | 0.86 | 0.86 | 0.78 | 0.68 | 0.58 |

*Mass balance for the water and alkali solubilized hemicelluloses of SHSprocessed wheat bran.*

The mass balance for the hemicellulose solubilization is shown in Figure 6. The results indicate that as higher temperatures and water activity is applied during SHS processing, more hemicellulose becomes water solubilized. Correspondingly, the amount of alkali solubilized hemicelluloses decreases as higher temperatures and water activity are applied during SHS processing. The water solubilized hemicelluloses increase two fold under SHS conditions of 140°C and 0.7 $a_w$.

*Molecular weighs distribution as affected by SHS processing*

The relative changes in molecular weight (Mw) distribution of the water solubilized material from the SHS processed wheat bran was also determined using light scattering techniques. The results suggest that more water solubilized material is obtained when treatment temperature is increased from 120 to 160°C at both water activities used. Furthermore, the results indicate that relatively low Mw species appear at SHS conditions of 160°C, water activity ($a_w$) of 0.5 and treatment time of 50 mins. In contrast, a similar time-temperature regimen conducted at $a_w$ of 0.7 did not result in the appearance of a low Mw peak.

At similar time-temperature regimens, maintenance of an $a_w$ of 0.5, in general resulted in the solubilization of higher Mw species as compared to samples processed at an increased $a_w$ (0.7). from the distribution of the Mw at SHS treatment conditions of 160°C, 50 min, 0.5 $a_w$ it appears that there has been degradation of the solubilized material.

*Changes in protein content as affected by SHS processing*

The effect of SHS processing on the protein content of the wheat bran samples was determined using SDS-Page. The results indicate that at temperatures above 120°C, proteins could not be solubilized by the buffer used. Furthermore, amongst those proteins that could be solubilized by the buffer, treatments at 120°C showed a protein band that was not present in the control. This protein band may be due to conjugation of the proteins with other wheat bran constituents. This may also suggests that Maillard type reaction products may be obtained from SHS processed wheat bran.

*Color Formation during SHS processing*

The absorbance spectrum of the water solubilized extracts from the SHS processed and control wheat bran samples shows an increase in absorbance around 250 to 350 nm. This increase in absorbance is consistent with the increased dark/burnt color of the SHS treated wheat bran. Since many compounds (such as soluble proteins) also absorb in this range (180nm), the soluble protein levels were also determined. However, the results indicate that the strong increased absorbance of the samples treated at 160°C, 0.7 $a_w$ and 50 min SHS processing conditions were not due to increased solubilized proteins which absorb around 280 nm. It is however possible that the increase in absorbance may be due to the formation of caramelization products such as 5-HMF (Maximum absorbance around 280 nm). Another plausible explanation could be the formation of early Maillard reaction products (such as soluble melanoidins) which absorb around 345 nm. Late Maillard reaction products absorb at 420 nm.

The amount of 5-HMF was determined for all the samples. However, no 5-HMF could be detected in the control and SHS processed wheat bran water solubilized extracts. This suggests then that the color formation observed in the samples may be due to the formation of early Maillard reaction products which include soluble melanoidins.

*Moisture Sorption Isotherm for SHS processed wheat bran*

The moisture sorption isotherm (MSI) of the SHS processed wheat bran was determined. The results suggest that compared with the control, the SHS processed wheat bran is less hygroscopic than the unprocessed wheat bran. In more general terms, the MSI obtained from the SHS processed wheat bran indicates changes in surface properties.

A set of the wheat bran samples was ground before moisture sorption isotherm determination. The results are similar with the samples that were not ground. However, the moisture adsorption for the ground samples was higher compared to the moisture sorption of the samples that were not ground. This may be explained by the increased surface area of the ground samples compared to the not ground samples. The same conclusion that surface changes have occurred in SHS may be inferred from the MSI of the ground samples.

## EXAMPLE 2 - EXPERIMENTS ON CORN BRAN

Twenty combinations of time, temperature, $a_w$ and pretreatments were used for the initial trials on SHS processing of corn bran (Table 3). The starting conditions used were based on the SHS conditions used for the wheat bran samples. Pretreatments with acid (phosphoric and acetic acids) and base (NaOH) were added in order to assess their effect on accessibility of fiber components (mainly arabinoxylan) after SHS processing.

Table 3. Tretament regimes for corn bran

| Sample No. | Sample label | Pre-treatment | Temp (°C) | Pressure (bar abs) | Water activity | Time (min) |
|---|---|---|---|---|---|---|
| 51 | 03.15098.A51 | water | 120 | 1 | 0.5 | 20 |
| 52 | 03.15098.A52 | water | 120 | 1 | 0.5 | 40 |
| 53 | 03.15098.A53 | acetic | 120 | 1 | 0.5 | 20 |
| 54 | 03.15098.A54 | acetic | 120 | 1 | 0.5 | 40 |
| 55 | 03.15098.A55 | phosphoric | 120 | 1 | 0.5 | 20 |
| 56 | 03.15098.A56 | phosphoric | 120 | 1 | 0.5 | 40 |
| 57 | 03.15098.A57 | NaOH | 120 | 1 | 0.5 | 20 |
| 58 | 03.15098.A58 | NaOH | 120 | 1 | 0.5 | 40 |
| 59 | 03.15098.A59 | water | 120 | 1.4 | 0.5 | 20 |
| 60 | 03.15098.A60 | water | 120 | 1.4 | 0.7 | 40 |
| 61 | 03.15098.A61 | acetic | 120 | 1.4 | 0.7 | 20 |
| 62 | 03.15098.A62 | acetic | 120 | 1.4 | 0.7 | 40 |
| 63 | 03.15098.A63 | phosphoric | 120 | 1.4 | 0.7 | 20 |
| 64 | 03.15098.A64 | phosphoric | 120 | 1.4 | 0.7 | 40 |
| 65 | 03.15098.A65 | NaOH | 120 | 1.4 | 0.7 | 20 |
| 66 | 03.15098.A66 | NaOH | 120 | 1.4 | 0.7 | 40 |
| 67 | 03.15098.A67 | water | 160 | 4.2 | 0.7 | 20 |
| 68 | 03.15098.A68 | water | 160 | 4.2 | 0.7 | 40 |
| 69 | 03.15098.A69 | phosphoric | 160 | 4.2 | 0.7 | 20 |
| 70 | 03.15098.A70 | phosphoric | 160 | 4.2 | 0.7 | 40 |

The sugar composition of the water solubilized samples from SHS processed corn bran is shown in Figure 7a.

The results indicate that four major sugars are present in the water solubilized material from SHS processed wheat bran. The sugars include glucose, xylose, arabinose and galactose. The glucose present in the water solubilized material come from starch while the arabinose and xylose are sugars from arabinoxylan. The galactose on the other hand may come from arabinogalactan proteins.

The alkali soluble material sugar composition is also rich in glucose, arabinose, xylose and galactose. Similar to the water solubilized material, the glucose in the sugar composition is largely from starch while arabinose and xylose are largely from arabinoxylan. The galactose units are from arabinogalactan proteins.

The arabinose and xylose sugar components of the water solubilized materials from treatments 66, 67, 68 and 70 (Figure 7b) were all at least twice that of the amount seen in the unprocessed (control) corn bran. These samples were treated at temperatures of 160 C (Table 3). This suggests that at SHS temperature condition of 120°C and below, no changes as far as amount of water extractable arabinose and xylose components may be obtained. However, at SHS temperatures of 160°C, more arabinose and xylose sugar units become water solubilized

The arabinose and xylose contents of the alkali solubilized material are shown in figure 7c. The amount of arabinose and xylose obtained from the alkali extracts was about three times more than the arabinose and xylose obtained from the water solubilized materials. Furthermore, the amount of alkali extractable material varies depending on the treatment. For example, treatment 59 (120°C, 20 mins) showed increased levels of alkali solubilized arabinose and xylose. This suggests that SHS processing may have varying effect on the loosening of the corn bran structure.

From the initial treatments made, a total of 10 conditions were selected for detailed study. The conditions chosen were based on water solubilization of arabinoxylan obtain from the arabinose and xylose sugar composition analysis. The conditions are shown in Table 4.

Table 4. Follow-up treatments for SHS processing on corn bran samples

| Sample label | Pre-treatment | Temp (°C) | Pressure (bar abs) | Water activity | Time (mins) |
|---|---|---|---|---|---|
| 03.15098.CB1 | none | 120 | 1.4 | 0.7 | 40 |
| 03.15098.CB2 | NaOH | 120 | 1.4 | 0.7 | 40 |
| 03.15098.CB3 | none | 140 | 1.8 | 0.5 | 40 |
| 03.15098.CB4 | none | 140 | 2.5 | 0.7 | 20 |
| 03.15098.CB5 | none | 140 | 2.5 | 0.7 | 40 |
| 03.15098.CB6 | NaOH | 140 | 2.5 | 0.7 | 40 |
| 03.15098.CB7 | NaOH | 160 | 4.2 | 0.7 | 40 |
| 03.15098.CB8 | none | 160 | 4.2 | 0.7 | 20 |
| 03.15098.CB9 | none | 160 | $.2 | 0.7 | 40 |
| 03.15098.CB10 | none | 160 | 4.2 | 0.7 | 60 |

The results indicate that the major sugars present in the sugar composition of the water solubilized materials are glucose, arabinose and xylose. Low levels of galactose and mannose were also detected. Analysis of the alkali solubilized material also indicated the same four major sugars present (glucose, arabinose, xylose and galactose).

The highest arabinoxylan content of the water solubilized material was obtained from sample CB 9 processed under the SHS conditions of 160°C, 40 min, 0.7 $a_w$. In general, samples processed above 120°C showed increased arabinoxylan contents relative to the control.

The highest level of alkali extractable arabinoxylan was obtained from sample CB 9 (160°C, 0.7 $a_w$, 40 mins,). The other samples had levels of alkali solubilized material that were comparable to the unprocessed (control bran). The total extractable arabinoxylan material (water and alkali solubilized material) varied widely between the samples suggesting varying effects of time, temperature and pre-treatment. Some of the samples were not analyzed for sugar composition due to sample preparation difficulties. Some samples did not freeze dry sufficiently. In general, the water solubilized arabinoxylan consisted of higher arabinose:xylose ratio relative to the alkali solubilized material. The results suggest that during SHS processing of corn bran, the ester linkages between ferulic acid and the arabinose are cleaved off. The alkali solubilized material on the other hand has low levels of arabinosylation. This may be an artifact of the solubilization in alkali (1 M NaOH) leading to the hydrolysis of arabinose residues from arabinoxylan. Furthermore, unsubstituted xylans form H-bonding with cellulose and other unsubstituted xylans that make them insoluble in water but upon alkali treatment become solubilized.

*Molecular weight determination*

The molecular weight distribution of arabinoxylan obtained from corn bran was analyzed using SEC-MALLS-RI. The results indicate a high degree of aggregation of the polysaccharide samples. An average Mw of about 600 KDa from the water solubilized arabinoxylan was obtained from the unprocessed corn bran (control). After SHS processing, the average Mw of the arabinoxylan obtained increased to about an average Mw of almost 2000 KDa. This increase in Mw may be attributed to aggregation of the arabinoxylan.

The accurate Mw distribution of the arabinoxylan obtained from SHS processed corn bran cannot be obtained when the samples aggregate to form supermolecular associations. These associations may be affected by a variety of factors (hydrophobic interactions, crosslinking with ferulic acid and many more).

However, the results at hand do not support that there is degradation of the arabinoxylan under the SHS conditions tested. The aggregated samples were not analyzed any further for Mw.

Relative to control, no change was observed in the oligosaccharide profile of alkali soluble corn bran arabinoxylan obtained from SHS processed corn bran at 120°C, 0.5 $a_w$ for 20 mins. At treatment temperatures of 160°C, significant changes were observed in the oligosaccharide profile, relative to the control (Figure 8a and b).

The results of the oligosaccharide studies in SHS processed corn bran indicate that SHS processing also influences arabinoxylan hydrolysis during alkali and acid extraction.

## EXAMPLE 3 - FOOD PREPARATION WITH MODIFIED BRAN

**Materials and methods**

*Wheat bran*

Wheat bran was processed at 120, 140 and 160 °C for 50 min. For each temperature, $a_w$ values of 0.5 and 0.7 were used. The resulting 6 brans and unprocessed brans as control were incorporated in bread and in crackers as outlined below.

*Bread making*

The bread making quality of the white flour and flour/bran mixtures were evaluated using a 10 g micro bread baking test as described by Meppelink (Sonderdruck aus Getreide und Mehl 9, 125-130 , 1959, and Sonderdruck Getreide, Mehl und Brot 35 (4),107-109, 1981) and performed in duplicate.

This micro bread baking test uses 10 g flour, mixed in a 10 g Mixograph (National Manufacturing, TMCO, Lincoln, NE). The Farinograph water absorption was used to determine the optimal amount of water in the dough. The mixing time was optimized based on the 2 g Mixograph. In all baking experiments 0.25 g yeast and 0.20 g salt (NaCl) was added.

The dough was rounded by hand and proofed for 45 min at 30 °C. The dough weight was adjusted to contain 8 g flour and the dough was moulded, placed in tins and proofed for another 60 min. The micro breads were baked in a small scale vertical revolving oven at 200 °C for 20 min, with steam generated at the start of baking. For the first 15 min the tins were surrounded by wet wooden moulds to regulate heat transfer to compensate for the higher surface/volume ratio of micro breads, and were removed for the last 5 min of baking. The volume of the breads was measured by water displacement after fully coating the bread surface with paraffin.

*Cracker making*

The leavening agent used was a protease obtained from Kerry Enzyme Com (Biobake BPN®) was dissolved in part of the water. All ingredients were mixed for 10 min in a Plastograph kneader, the temperature was controlled at 30 °C. 450 g of dough were rolled twice and then rested in a closed container for 30 min at 30 °C, 85% relative humidity. The dough was sheeted in a Rondo Seewer until the dough passed a 1.5 mm gap width twice. The sheets were subsequently docked, placed on perforated baking trays and cut in 4x4 squares. These were backed in a Rototherm oven with water injection (1 L/30s) for 7 min at 250 °C.

*Analyses*

**Dough mixing properties.**

The addition of fibres affects the dough consistency during mixing. Therefore, the required water addition to reach comparable dough consistencies in the bread baking test was determined. This method is adapted from ICC standard 115. The main difference with the ICC method is that current method uses 2% NaCl (on flour basis) in the determination in order to better simulate actual dough composition.

Dough mixing properties were analysed using a 2g Mixograph (National Manufactoring, TMCO, Lincoln, NE). The Mixograph tests used 2 g flour or flour/bran mixture, the amount of water as determined in the farinograph and 0.04 g NaCl was added based on flour weight. The mixing tests were performed at 20°C, a mixing head speed of 88 rpm and a mixing time of 15 min was used. The mixing trace was analysed using the Mixsmart software program and the parameters time to peak and bandwidth at time to peak of the midline analysis were obtained.

**Crackers, dimensions and sensory.**

The dimensions of the crackers (height, length and width) and weight were recorded. Moisture content of dough and crackers were measured with standard methods as well as the $a_w$ values of doughs and crackers. In a sensory session, color, dryness, hardness, crunchiness and sandiness of the crackers were judged by a panel on a scale from 1 to 10.

**Results**

*Bread*

Micro breads were formulated with the addition of 5% wheat bran. Addition of untreated bran caused a slight grey tinge of the crumb in comparison to the control. This effect was stronger with SHS treated bran. The crumb was darker and the grey tone more pronounced in breads containing bran treated at higher temperatures. The color increase is consistent with the color development in the bran. Higher temperatures result in formation of more degradation products in the material. Tasting revealed pleasantly nutty and roasting flavors in the bread produced with bran processed at 120 and 140 °C. Bran heated to 160 °C tended to have a more bitter flavor.

The greyish appearance of the bread was at least partly attributed to the contrast between the dark bran particles and the light crumb. Consequently, bran was micronized in order to achieve a more homogenous coloring. Bread produced from this bran appears less grey and more brown. The taste was not affected by these changes.

Not only flavor and color but also the bread volume was affected. Inclusion of untreated bran resulted in a small decrease of the bread volume in comparison to the control without bran. Bran treated at high temperatures tended to cause lower volume. The differences can be in the range of 10% of the total volume. The effect was more obvious for bran treated at higher temperatures. However, it also appears that the $a_w$ during the heat treatment has a pronounced effect on the bread volume. Higher $a_w$ resulted in smaller volumes.

A similar effect was seen for the micronized bran. Increasing processing temperature resulted in lower volume. However, low $a_w$ seemed to off-set the heat treatment on the bran. Bread baked with bran processed at 120 °C and $a_w$ 0.5 had the same volume as bread without bran, while the unprocessed bran caused lower bread volume.

*Crackers*

Crackers were chosen as an application since comparatively large amounts of bran can be included. Hence, changes in the processing properties, the product sensory, but also nutritional properties are more clearly visible in crackers than in applications with lower amounts of bran.

A practical problem with the inclusion of SHS treated wheat bran was the changed water binding capacity of the material. To compensate for this, crackers were produced with two different water levels: 30% water as per standard recipe and 36%, which resulted in similar dough handling properties as the standard recipe without bran addition. In the following, the water level is treated as another variable next to the different SHS treatment conditions.

The analysis of the data is made more difficult by the fact, that the crackers were produced at two different days. Due to outer conditions being different, some unexpected variations were seen concerning moisture content and $a_w$ of the crackers (Table 5). Crackers produced on the first day, i.e. control without bran and with untreated bran as well as some of the bran treated at 120 °C had higher moisture contents in the final product. However, overall differences between the crackers are small.

Obviously, higher addition of water resulted in higher moisture content in the dough. However, the water addition, and thereby the moisture content of the dough, does not show a strong correlation with the moisture content of the corresponding cracker. In fact, crackers produced with more water tended to have lower moisture contents. The differences are small, however, since the measured moisture contents are very low.

Table 5. Moisture content and $a_w$ of doughs and crackers produced with SHS treated wheat bran.

| | SHS T °C | SHS $a_w$ | Water addition %flour | Dough moisture% | Cracker moisture% | Dough $a_w$ | Cracker $a_w$ |
|---|---|---|---|---|---|---|---|
| No bran | | | 30 | | | | |
| No bran | | | 36 | | | | |
| Control bran | 0 | 0 | 30 | 29,23 | 3,33 | 0,945 | 0,191 |
| Control bran | 0 | 0 | 36 | 31,55 | 2,64 | 0,954 | 0,179 |
| 120 RV 0,5 | 120 | 0,5 | 30 | 27,56 | 3,07 | 0,941 | 0,169 |
| 120 RV 0,5 | 120 | 0,5 | 36 | 29,93 | 1,32 | 0,948 | 0,128 |
| 120 RV 0,7 | 120 | 0,7 | 30 | 27,68 | 2,33 | 0,911 | 0,089 |
| 120 RV 0,7 | 120 | 0,7 | 36 | | 2,03 | | 0,096 |
| 140 RV 0,5 | 140 | 0,5 | 30 | 27,76 | 1,84 | 0,922 | 0,067 |
| 140 RV 0,5 | 140 | 0,5 | 36 | 30,28 | 1,69 | 0,924 | 0,084 |
| 140 RV 0,7 | 140 | 0,7 | 30 | 27,69 | 1,82 | 0,913 | 0,088 |
| 140 RV 0,7 | 140 | 0,7 | 36 | 30,17 | 1,97 | 0,928 | 0,091 |

The treatment conditions of the bran had only limited influence on the $a_w$ of either dough and cracker. No clear correlations could be found. Surprisingly, the water content did not influence the $a_w$ in the respective doughs or crackers. The water binding capacity of the ingredients was apparently sufficient to make the additional water unavailable. Furthermore, the different mixing properties would have caused more or less interaction of the bran material with the water. This could explain the lack of differences seen in the $a_w$ of the crackers.

Cracker dimensions (data not shown) were not changed by the addition of bran or different bran treatments. Interestingly, the increase of the water level from 30 to 36% resulted in decreased mass of the crackers. This corresponds with the lower moisture content of the crackers.

The sensory scores for all tested crackers are shown in Table 6. Values for commercial available crackers are included for comparison.

It is easy to see, that the addition of bran, whether SHS treated or not, caused higher scores for color, dryness and sandiness, while hardness and crunchiness was decreased. Testers commented, that by SHS treatment unpleasant "green" aromas were lost, while treatment at 160 °C caused some more bitter flavor.

However, it has to be emphasized that the sensory evaluation was done as a discussion between the panelists. Due to the small overall differences in the scores, these findings have to be treated as trends rather than statistically supported results.

Table 6. Sensory scores for crackers produced with SHS treated wheat bran at two moisture levels.

| | SHS T °C | SHS $a_w$ | water addition %flour | Color darkness | Dryness | Hardness | Crunchiness | Sandiness |
|---|---|---|---|---|---|---|---|---|
| Commercial cracker | | | | | | | | |
| No bran | | | 30 | | | | | |
| No bran | | | 36 | | | | | |
| Control bran | | | 30 | 7 | 5,5 | 4 | 3 | 7 |
| Control bran | | | 36 | 7,5 | 5,25 | 5,5 | 5 | 7 |
| 120 RV 0,5 | 120 | 0,5 | 30 | 7,25 | 6 | 4 | 3 | 7 |
| 120 RV 0,5 | 120 | 0,5 | 36 | 7,5 | 5,5 | 5 | 3 | 6 |
| 120 RV 0,7 | 120 | 0,7 | 30 | 7,25 | 6 | 4 | 3 | 7 |
| 120 RV 0,7 | 120 | 0,7 | 36 | 7,5 | 5,5 | 5 | 4,5 | 6 |
| 140 RV 0,5 | 140 | 0,5 | 30 | 8 | 6,5 | 4 | 3 | 7 |
| 140 RV 0,5 | 140 | 0,5 | 36 | 7,5 | 6 | 4,5 | 4 | 6,5 |
| 140 RV 0,7 | 140 | 0,7 | 30 | 7,5 | 6,5 | 4 | 3 | 7 |
| 140 RV 0,7 | 140 | 0,7 | 36 | 7,5 | 6 | 4 | 4 | 7 |

The largest variations in the scores were caused by the changes in water addition. Increased water levels in the dough correlated with decreased perception of dryness and sandiness, but increased scores for crunchiness and hardness. This is consistent with the trend towards lower moisture contents in these crackers.

A certain correlation between the SHS temperature and the perceived dryness of the crackers was found, higher temperatures caused an increased perception of dryness. Otherwise, no obvious trends in the scores caused by the SHS conditions were found.

**Claims**

1. A method for enhancing the nutritional value of food comprising:

    a. optionally milling a cereal grain,
    b. pre-treating cereal bran
    c. treating cereal bran with super heated steam (SHS)
    d. performing the SHS treatment at a controlled water activity level of between 0.3 and 0.9, preferably between 0.4 and 0.8, more preferably between 0.5 and 0.7, more preferably at about 0.7
    e. adding the bran resulting from the previous step to a food product or semi-product
    f. if needed, completing the food preparation process by further processing the semi-product or food product.

2. Method according to claim 1, wherein the semi-product is dough and the further processing comprises baking.

3. Method according to any of the previous claims, wherein the bran is selected from wheat bran, rice bran, corn bran, oat bran, barley bran and millet bran, preferably wheat bran or corn bran.

4. Method according to any of the previous claims, wherein the SHS treatment is performed at a temperature in the range of 110 - 200°C, more preferably in the range of 120-160°C.

5. Method according to any of the previous claims in which the pre-treatment of the cereal bran was selected from the group of soaking or spraying under acid conditions, preferably phosphoric acid, acetic acid or a combination of these; soaking or spraying under basic conditions, preferably wherein the base is NaOH or KOH; and soaking in water.

6.  Method according to any of the previous claims in which the SHS treatment is performed under elevated pressure, preferably where the pressure is between 1 and 5 bar, more preferably wherein the pressure is 0.5 to 3.0 bar.

7.  Method according to any of the previous claims in which the pre-treatment of the bran and the SHS treatment are performed in one compartment.

8.  Method according to any of the previous claims in which said method is performed batch-wise.

9.  Cereal bran treated with SHS at a controlled water activity level of between 0.3 and 0.9.

10. Cereal bran which is pre-treated with an acid or a base and subsequently treated with SHS at a controlled water activity level of between 0.3 and 0.9, preferably wherein the SHS treatment is performed at a water activity of less than 0.9.

11. Food product or semi-product to which the bran according to claim 9 or 10 has been added.

12. Use of a cereal bran that is treated with SHS at a controlled water activity level of between 0.3 and 0.9 for enhancing the nutritional value of a food product.


**Patentansprüche**

1.  Verfahren zur Verbesserung des Nährwerts von Lebensmitteln, umfassend:

    a. optional Mahlen eines Getreidekorns,
    b. Vorbehandeln von Getreidekleie
    c. Behandeln von Getreidekleie mit überhitztem Dampf (SHS, engl. super heated steam)
    d. Durchführen der SHS-Behandlung bei einem geregelten Wasseraktivitätsniveau von zwischen 0,3 und 0,9, bevorzugt zwischen 0,4 und 0,8, bevorzugter zwischen 0,5 und 0,7, bevorzugter um etwa 0,7
    e. Hinzufügen der aus dem vorhergehenden Schritt resultierenden Kleie zu einem Lebensmittelprodukt oder einem Halbprodukt
    f. falls erforderlich, Vervollständigen des Lebensmittelzubereitungsverfahrens durch weiteres Verarbeiten des Halbprodukts oder Lebensmittelprodukts.

2.  Verfahren nach Anspruch 1, wobei das Halbprodukt Teig ist und die weitere Verarbeitung Backen umfasst.

3.  Verfahren nach einem der vorhergehenden Ansprüche, wobei die Kleie ausgewählt ist aus Weizenkleie, Reiskleie, Maiskleie, Haferkleie, Gerstenkleie und Hirsekleie, bevorzugt Weizenkleie oder Maiskleie.

4.  Verfahren nach einem der vorhergehenden Ansprüche, wobei die SHS-Behandlung bei einer Temperatur in dem Bereich von 110-200°C, bevorzugter in dem Bereich von 120-160°C durchgeführt wird.

5.  Verfahren nach einem der vorhergehenden Ansprüche, in dem die Vorbehandlung der Getreidekleie ausgewählt wurde aus der Gruppe von Einweichen oder Besprühen unter sauren Bedingungen, bevorzugt Phosphorsäure, Essigsäure oder eine Kombination von diesen; Einweichen oder Besprühen unter basischen Bedingungen, bevorzugt wobei die Base NaOH oder KOH ist; und Einweichen in Wasser.

6.  Verfahren nach einem der vorhergehenden Ansprüche, wobei die SHS-Behandlung unter erhöhtem Druck durchgeführt wird, bevorzugt wobei der Druck zwischen 1 und 5 bar ist, bevorzugter wobei der Druck 0,5 bis 3,0 bar ist.

7.  Verfahren nach einem der vorhergehenden Ansprüche, in welchem die Vorbehandlung der Kleine und die SHS-Behandlung in einem Kompartiment durchgeführt werden.

8.  Verfahren nach einem der vorhergehenden Ansprüche, in welchem das Verfahren portionsweise durchgeführt wird.

**9.** Getreidekleie, behandelt mit SHS bei einem geregelten Wasseraktivitätsniveau zwischen 0,3 und 0,9.

**10.** Getreidekleie, die mit einer Säure oder einer Base vorbehandelt wird und anschließend mit SHS bei einem geregelten Wasseraktivitätsniveau zwischen 0,3 und 0,9 behandelt wird, bevorzugt wobei die SHS-Behandlung bei einer Wasseraktivität von weniger als 0,9 durchgeführt wird.

**11.** Lebensmittelprodukt oder Halbprodukt, zu dem die Kleie nach Anspruch 9 oder 10 hinzugefügt wurde.

**12.** Verwendung einer Getreidekleie, die mit SHS bei einem geregelten Wasseraktivitätsniveau zwischen 0,3 und 0,9 behandelt wird, um den Nährwert eines Lebensmittelprodukts zu verbessern.

**Revendications**

**1.** Procédé pour améliorer la valeur nutritive d'un aliment, comprenant les étapes consistant à :

a. moudre facultativement un grain de céréale,
b. prétraiter le son de céréale
c. traiter le son de céréale avec de la vapeur surchauffée (SHS)
d. effectuer le traitement par SHS à un niveau d'activité d'eau commandé compris entre 0,3 et 0,9, de préférence entre 0,4 et 0,8, de manière plus préférée entre 0,5 et 0,7, de manière plus préférée à environ 0,7
e. ajouter le son résultant de l'étape précédente à un produit alimentaire ou produit semi-fini
f. le cas échéant, achever le processus de préparation d'aliment par traitement supplémentaire du produit semi-fini ou produit alimentaire.

**2.** Procédé selon la revendication 1, dans lequel le produit semi-fini est une pâte, et le traitement comprend en outre une cuisson.

**3.** Procédé selon l'une quelconque des revendications précédentes, dans lequel le son est choisi parmi le son de blé, le son de riz, le son de maïs, le son d'avoine, le son d'orge et le son de mil, de préférence du son de blé ou de son de maïs.

**4.** Procédé selon l'une quelconque des revendications précédentes, dans lequel le traitement par SHS est effectué à une température comprise dans la plage de 110 à 200°C, de manière plus préférée dans la plage de 120 à 160°C.

**5.** Procédé selon l'une quelconque des revendications précédentes, dans lequel le prétraitement du son de céréale est choisi dans le groupe comprenant un trempage ou une pulvérisation dans des conditions acides, de préférence de l'acide phosphorique, de l'acide acétique ou une combinaison de ceux-ci ; un trempage ou une pulvérisation dans des conditions basiques, de préférence où la base est NaOH ou KOH ; et un trempage dans de l'eau.

**6.** Procédé selon l'une quelconque des revendications précédentes, dans lequel le traitement par SHS est réalisé sous pression élevée, la pression étant de préférence comprise entre 1 et 5 bars, la pression étant de manière plus préférée de 0,5 à 3 bars.

**7.** Procédé selon l'une quelconque des revendications précédentes, dans lequel le prétraitement du son et le traitement par SHS sont effectués dans un seul compartiment.

**8.** Procédé selon l'une quelconque des revendications précédentes, dans lequel ledit procédé est effectué par lot.

**9.** Son de céréale traité par SHS à un niveau d'activité d'eau commandé entre 0,3 et 0,9.

**10.** Son de céréale qui est prétraité avec un acide ou une base, et traité ensuite par SHS à un niveau d'activité d'eau commandé compris entre 0,3 et 0,9, de préférence dans lequel le traitement par SHS est réalisé à une activité d'eau inférieure à 0,9.

**11.** Produit alimentaire ou produit semi-fini auquel le son selon la revendication 9 ou 10 a été ajouté.

**12.** Utilisation d'un son de céréale qui est traité par SHS à un niveau d'activité d'eau commandé compris entre 0,3 et 0,9, pour améliorer la valeur nutritionnelle d'un produit alimentaire.

Fig. 1

292:1                    50μm

monster: controle detail

292:1                    50μm

monster: monster A21 detail

292:1                    50μm

monster: monster A25 detail

Fig. 2a

SEM HV: 15.00kV  50μmv
View field: 249.6 μm

SEM HV: 15.00kV  50μm
View field: 251.3 μm  A21

SEM HV: 15.00kV  50μm
View field: 251.3 μm  A25

Fig. 2b

Fig. 3

Fig. 4

Fig. 5a

Fig. 5b

| | wheat bran control | 120 C, 0.5 Aw | 120 C 0.7 Aw | 140 C, 0.5 Aw | 140 C, 0.7 Aw |
|---|---|---|---|---|---|
| WS | 6,60 | 9,53 | 10,72 | 11,61 | 12,16 |
| NaOH soluble | 93,40 | 90,47 | 89,28 | 88,39 | 87,84 |

Fig. 6

EP 2 900 090 B1

Fig. 7a

Fig. 7b

Fig. 7c

Fig. 8a

Fig. 8b

**EP 2 900 090 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61268144 A
- JP 58183050 B
- US 5112964 A
- US 20040018256 A1
- WO 2004066751 A
- WO 2007105947 A

### Non-patent literature cited in the description

- **O. LEHTINEN.** Modifying wheat, bran for food applications - effect of wet milling and enzymatic treatment. Metropolia University of Applied Sciences, 2012
- **RALET et al.** *J. Cereal Sci,* 1990, vol. 11, 249-259
- **MAES ; DELCOUR.** *J. Cereal Sci.,* 2001, vol. 35 (3), 315-326
- **SCHELLER ; ULVSKOV.** *Annu Rev Plant Biol,* 2010, vol. 61, 263-289
- **MEPPELINK.** *Sonderdruck aus Getreide und Mehl,* 1959, vol. 9, 125-130
- *Sonderdruck Getreide, Mehl und Brot,* 1981, vol. 35 (4), 107-109